(19) Europäisches Patentamt
European Patent Office
Office européen des brevets

(11) **EP 2 073 022 B1**

(12) **EUROPEAN PATENT SPECIFICATION**

(45) Date of publication and mention
of the grant of the patent:
**21.08.2013 Bulletin 2013/34**

(51) Int Cl.:
*G01P 3/483* (2006.01)     *G01P 3/488* (2006.01)
*G01P 3/481* (2006.01)

(21) Application number: **08254078.2**

(22) Date of filing: **19.12.2008**

(54) **Method and apparatus for monitoring the rotational speed of a gas turbine shaft**

Verfahren und Vorrichtung zur Überwachung der Drehzahl einer Gasturbinenwelle

Procédé et appareil pour la surveillance de la vitesse de rotation d'un arbre de turbine à gaz

(84) Designated Contracting States:
**DE FR GB IT**

(30) Priority: **21.12.2007 GB 0725076**

(43) Date of publication of application:
**24.06.2009 Bulletin 2009/26**

(73) Proprietor: **WESTON AEROSPACE LIMITED**
**Farnborough**
**Hampshire GU14 7PW (GB)**

(72) Inventors:
• **Kulczyk, Konrad Wojciech**
**c/o Weston Aerospace Limited**
**Farnborough, Hampshire, GU14 7PW (GB)**
• **Palmer, Antony**
**c/o Weston Aerospace Limited**
**Farnborough, Hampshire, GU14 7PW (GB)**
• **Clifton-Welker, Matthew**
**c/o Weston Aerospace Limited**
**Farnborough, Hampshire, GU14 7PW (GB)**

(74) Representative: **Vleck, Jan Montagu**
**Reddie & Grose LLP**
**16 Theobalds Road**
**London**
**WC1X 8PL (GB)**

(56) References cited:
EP-A- 1 564 559     DE-C1- 19 736 712
US-A- 4 358 828     US-A- 5 170 365

**Description**

The present invention is concerned with method and apparatus for monitoring the rotational speed of a gas turbine shaft having a number of electrically conductive spaced features on or rotating with the shaft. Preferred embodiments of the invention are concerned with methods and apparatuses for processing signals in order to calculate, with high accuracy and a fast response time, the rotational speed of a gas turbine shaft. Embodiments of the invention are applicable to both jet engines and industrial gas turbines.

The speed of a rotating gas turbine shaft is typically monitored by monitoring the movement of a magnetic toothed phonic or tone wheel which rotates with the gas turbine shaft. A magnetic speed probe monitors the changes in a magnetic field as a tooth passes through it. The passage of each tooth generates a probe signal pulse or signal peak and the probe signal train is used to calculate the rotational speed of the toothed wheel by measuring the time between successive pulses, or counting a number of pulses in a fixed time. The rotational speed of the gas turbine shaft is then derived from the speed of the phonic or tone wheel.

There is no easy access to the turbine shaft, so the toothed or phonic wheel is typically at a distance from the shaft and connected thereto via a long gear train. A big disadvantage of such a system is that the gear train is expensive and heavy, and can only be replaced during a major engine overhaul. An alternative to the remote phonic wheel coupled to the turbine shaft by a gear train is to mount the phonic wheel directly on the shaft. However this requires additional space inside the engine for the wheel and probe fixture.

Eddy current sensors such as that disclosed in GB 2,265,221 can also be mounted on the outside of an engine and used to measure the rotational speed of a gas turbine shaft by directly monitoring movement of the blades mounted on the rotating shaft. If the separation between blades is known, then the rotational speed can be determined from the time between successive signal pulses where each signal pulse corresponds to passage of blade past the sensor.

Patent numbers GB 2,265,221, GB 2,223,103, US 3,984,713 and GB 1,386,035 each describe eddy current or inductive sensors which may be used to measure the rotational speed of a bladed shaft. The sensors described in these documents are speed or torque sensors, each comprising a magnet positioned so that the tips of the blades pass in close proximity to the magnet. When a blade is moving close to the sensor magnet, eddy currents are generated in the tip of the blade. These eddy currents generate their own magnetic fields which are detected by a coil located in the sensor. A rotating shaft with blades, such as that in a gas turbine, will therefore generate a series of pulses with the period between pulses representing the period between successive blades as they pass the sensor. The series of pulses can be used to determine the speed of the rotating shaft; the speed is calculated from the time measurements between the pulses.

It is possible to use other types of sensors, such as optical, capacitive or RF (radio frequency) sensors, but these sensors cannot operate through the turbine casing and require direct access to the blades through a hole in the casing. This requires a hole through the turbine casing.

It is known that the speed of a moving object (e.g. a turbine blade or the tooth of a phonic wheel) can be determined by measuring the time taken for that object to pass from one sensor or monitoring station to another sensor or monitoring station. However, such speed measuring arrangements which use measurement of the "time of flight" between two points require one to know the distance between the two points. This has meant that such "time of flight" measurement systems have been considered unsuitable for measuring speed in environments or systems where the distance between the two sensors varies, such as in, for example, separate spaced magnetic sensors such as eddy current sensors.

The distance between two spaced sensors depends on the physical spacing of the two sensors and can vary due to thermal expansion of the sensor(s) mounting fixture. Furthermore when the sensors are magnetic sensors such as eddy current sensors, we need to consider the effective distance which is the distance between the points at which a passing blade or projection generates a signal peak or pulse zero crossing. This distance also depends on the magnetic field geometry of the sensors and blades or projections. This magnetic geometry depends on several parameters such as the dimensions of the coil, magnet, and/or blades as well as the electrical and magnetic properties of the blade and magnet material, electrical and magnetic properties and their dependence on temperature. The inventors estimate that the variations in magnetic distance are an order of magnitude higher than the errors arising from thermal expansion. The magnetic distance errors or variations are therefore highly significant. Since some of these properties are difficult to measure and all of them vary, time of flight measurements have been considered unsuitable for systems using eddy current sensors in environments such as gas turbines where the distance between the sensors will vary and accurate measurements are desired.

Time of flight method based on the measuring time between two pulses generated by two sensors spaced at a certain distance is commonly used for rotational speed measurements where a distance between two sensors is known and constant. The invention of the subject application is concerned with a measuring system where the distance is known only approximately and is varying with time.

The proposed solution results from a need to measure rotational speed with a very high accuracy of the order of 0.1%, and a very fast response time, much less than one revolution. Therefore there is a need to not only measure time between the pulses with high accuracy but to know the distance with a very high accuracy. It is known that the distance used to calculate the speed of rotation does not only depend on the physical distance between the sensors but also on the magnetic distance between the sensors.

The magnetic distance is difficult to define and impossible to measure directly. It could be described as a physical distance between the two sensors to generate signal pulses in such a way that for the known speed, v and time measurements t, magnetic distance s is given by

$$s = v \times t$$

Since we know that in practice distance s changes very slowly therefore in the subject invention one can determine the distances from the independent speed measurements multiplied by the time interval between the pulses.

The known time of flight applications are not concerned with a very high accuracy, fast response time of shaft speed measurements using magnetic sensors.

EP 1 564 559 discloses a system for monitoring the rotational speed of a gas turbine shaft having a number of electrically conductive spaced features on and/or rotating with shaft, the system including:

i) a magnet for generating a magnetic flux pattern in the path of said spaced features;

ii) two spaced eddy current sensors for sensing the movement of said spaced features past the respective sensors, each said sensor including an eddy current detector element to be positioned adjacent said path to detect magnetic fields generated by eddy currents generated in each said spaced feature as it moves through the flux pattern, and induce a voltage in each sensor output, the voltage varying with variations in the eddy current sensed by the respective sensors so as to create a voltage signal pulse corresponding to the passage of a feature past each sensor;

iii) a timer for determining the time period between voltage signal pulses generated by the same feature as it passes between the two sensors; distance determination means determining a measure of the distance between the points at which said features generate a respective signal pulse at each of said sensors;

iv) means for updating the distance determination as the distance changes over time; and

v) speed calculation means for calculating speed from the time period of element (iii) and the distance of element (iv).

The present invention provides a system and method as defined in independent claims 1 and 10. Preferred features are defined in the dependent claims.

Preferred embodiments of the present invention will be described, by way of example only, with reference to the attached figures. The figures are only for the purposes of explaining and illustrating a preferred embodiment of the invention and are not to be construed as limiting the claims. The skilled man will readily and easily envisage alternative embodiments of the invention in its various aspects.

In the figures:

Figures 1a and 1b are a schematic illustration of a known speed sensor arrangement set up to determine the time intervals between successive tips of the blades of a turbine as they move past the sensor, with figure 1a illustrating the sensor arrangement and figure 1b the output signal train from the sensor;

Figures 2a and 2b are a schematic illustration of two speed sensors set up to determine the time of flight period of successive tips of the blades of a turbine as they move across the spacing between two sensors from the first sensor to the second sensor, in which figure 2a illustrates the sensor arrangement and figure 2b the output signal pulse trains from the sensors;

Figure 3 is a block diagram illustrating a system embodying the present invention; Figure 4 is a diagram illustrating the effects of blade tip movement relative to each other (i.e blade jitter) on monitoring systems such as that of figures 1 and 2;

Figure 5 illustrates a variation of time intervals between consecutive blades when a shaft such as that of figure 1 is accelerating at a rate of about 2000 rpm/s from a speed of about 1000 rpm;

Figure 6 is a diagram illustrating the effect of a missing pulse or blade, and blade jitter on monitoring systems such as that of figures 1 and 2;

Figure 7 illustrates a variation of time intervals between consecutive blades when a shaft such as that of figure 1, but with five missing blades, is accelerating at 2000 rpm/s from a speed of about 1000rpm;

Figure 8 is a diagram illustrating a pulse or signal train corresponding to the sensing of a position of a turbine blade having a number of missing pulses or signal peaks corresponding to, for example, missing, worn or damaged blades;

Figure 9 is a graph illustrating, for a pulse or signal train such as that of figure 8, the dependence of the ratio of the latest blade period time to the average blade period time over the last AV periods on the total number of missing pulses, M, for different numbers of detected pulses, D, in the latest blade period, as a function of blade jitter;

Figure 10 is a diagram similar to that of figure 8, but showing the presence of M missing pulses in AV periods, with D missing pulses being present in the latest blade period and the AV periods including the latest blade period; and

Figure 11 is a graph showing calculated values of the ratio of the latest blade period time to the average blade period time over the last AV periods for different numbers of detected missing pulses, D, as a function of jitter using the predictor limiter method described in GB 2, 414, 300.

In a preferred embodiment of the present invention, the speed of a gas turbine shaft having, say, twenty-nine compressor blades mounted thereon is calculated based on measurements from two speed sensors such as the eddy current sensor type described in GB 2,265,221. The sensors note the passage of a blade past them and a counter or timer connected to their outputs determines the time interval between the passage of a blade past the two sensors; i.e. the time it takes for the blade to travel between the sensors. The data processing apparatus may be a digital engine control unit.

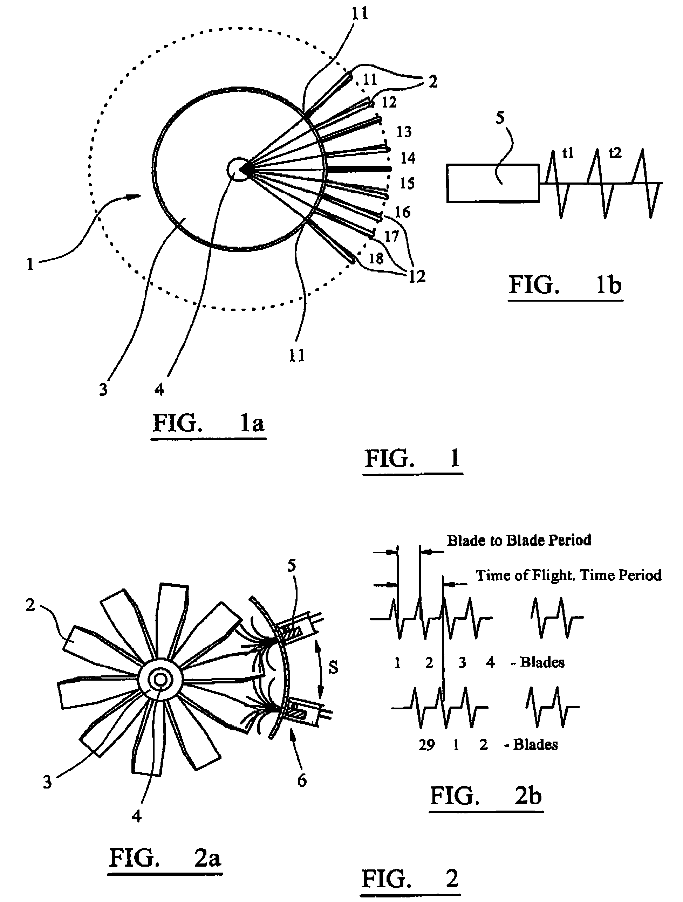

Referring to figure 1 showing a bladed gas turbine shaft 1, a shaft 4 has a disc 3 connected thereto. The disc has twenty-nine blades 2 (not all shown) fixed thereto at equal points spaced around the shaft's circumference. Each blade 2 is fixed to the disc by a pin (not shown). Each blade 2 can therefore move or swivel about its pin in a range of about +/- 20 degrees. This movement is known as jitter and can give rise to measurement errors.

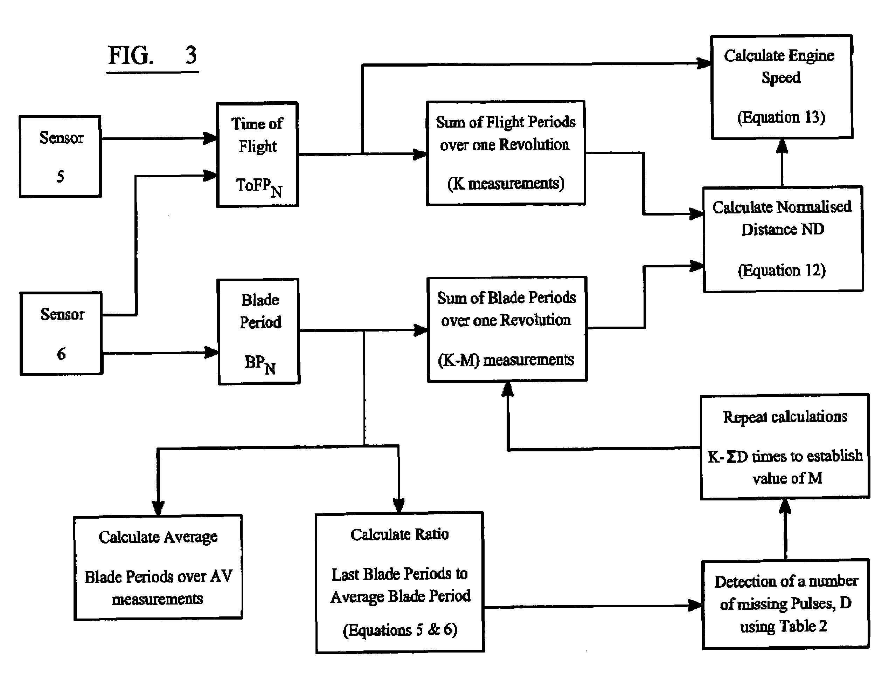

Speed sensors 5, 6 (see Figures 2 and 3) are located near the path of the rotating blades and note the passage of each blade tip as it passes each of the sensors. Each sensor produces a pulse or a signal peak (see Figures 1 to 3) as a tip passes it.

In this text, reference is made to signal pulse or peak. For a magnetic sensor, what happens is that as a feature approaches and then moves away from the sensor, a signal similar to a single sine wave results (i.e. having positive and negative peaks). The position of the pulse for the purposes of the described embodiments is usually taken to be the zero crossing point between the positive and negative peaks. Time periods are measured between respective zero crossings.

A data processor (not shown) is coupled to the speed sensors 5, 6 which receives as an input the sequence of pulses generated by each of the sensors. There may be significant noise produced by the jitter effect, and missing pulses.

As illustrated in Figure 3 and discussed in more detail below, the system measures the time taken for a blade to pass from the first sensor 5 to the second sensor 6 by noting the time of flight ToF between the pulses generated at the respective sensors by the blade. In order to then determine the rotational speed it is necessary to determine the distance between the two sensors 5, 6. A measure of distance between sensors is derived by summing the times of flights for a number of successive blades then dividing that time by the sum of the corresponding blade periods to obtain a coefficient which is a measure of the relative proportion of the distance between the sensors to the distance between blades.

The data processor coupled to the speed sensors 5, 6 includes a counter which determines the time interval between successive signal pulses (t(1), t(2), see Figure 1) produced by one of the sensors e.g. sensor 5. The time interval between the successive signals at sensor 5 provides the blade period $BP_N$ (see Figure. 3) These time intervals may be stored in a memory.

The data processor also determines the time needed for a single blade to travel between sensors 5 and 6 spaced by distance S (Figure.2). This time interval provides the time of flight period $ToF_N$ for the Nth blade (see Figure 3). These time intervals are also stored in the memory.

The spacing, S, between the two sensors 5 and 6 should be large enough to achieve the required accuracy of time measurements for a given clock frequency. In practice, S is limited by the available physical space in an application and is typically between 1 and 2 times the spacing between adjacent turbine blades. A preferred value of S is about 1.36 times the blade spacing where the blade tips pass sensor 5 and then pass sensor 6 after a normalised period of 1.36. If the spacing is 1 or 2, pulses from different sensors would come in at the same time to the processor for the Time of Flight calculation. A spacing of 1.5 would therefore be optimal from the point of view of reducing delay in processing the signals. However as both sensors 5, 6, will typically be in a single "sensor box", and it is desirable to keep the box as small as possible, a 1.36 spacing is a compromise.

As mentioned above, to monitor the shaft rotational speed it is necessary to know very accurately the distance, S, between the two sensors 5, 6. This distance depends on the mechanical spacing of the two sensors as discussed above and can vary due to the thermal expansion of the sensor mounting fixture. When the sensors are eddy current sensors, this distance also depends on the magnetic field geometry of the sensors and the blades. This magnetic geometry depends on several parameters such as the coil, magnet, blade dimensions, blade and magnet material, magnetic and electrical properties and their dependence on temperature. Since these properties vary with time as, for example, blade thickness changes due to wear and the magnetic properties vary with temperature, it is necessary to repeatedly calibrate (and then recalibrate) the distance S.

The data processor and associated circuitry is used to calculate from the time of flight period measurements, the average blade speed over the distance between the sensors (i.e. ToF) 5, 6, by:

$$V = S/T \dots\dots\dots\dots\dots\dots\dots\dots\dots\dots\dots\dots\dots\dots\dots\dots\dots (1)$$

Where:

V is the average blade speed;

T is the time needed by one blade to travel between the two sensors, and

S is the distance between the two sensors.

In order to determine a measure for the spacing 5, 6 between the sensors, a normalised distance, ND, between the sensors is calculated. This can be defined as a ratio of the distance between the sensors, S, to the nominal spacing between the turbine blades.

The normalised distance ND, is the ratio of the cumulative total of the time of flight periods over a selected number K of the time of flight periods, to the cumulative total of the blade periods over that selected number K of flight periods

$$ND = \frac{\sum_{i=N-K}^{i=N} ToF_i}{\sum_{i=N-K}^{i=N} BP_i} \qquad (2)$$

where :

N is the blade or blade pulse identifier;
i is the summation index;
ND is the normalised distance; and
K is the selected number of blades.

Where there are missing or damaged blades resulting in a missing signal or signals;

$$ND = \frac{\sum_{i=N-K}^{i=N} ToF_i}{\sum_{i=N-(K-M)}^{i=N} BP_i} \qquad (3)$$

where:

N is the Blade Pulse identifier;
i is the summation index;
ND is the normalised distance;
K is the selected number of blades; and
M is the number of missing pulses

Preferably, the selected number K of time of flight periods correspond to a single complete revolution of the shaft.

The normalised distance can be determined continuously or simply repeatedly. The regularity of the calculation (and re-calculation) of the stored normalised distance depends on how much change there is believed to be between revolutions and how accurate the desired output. The more accurate the desired output and/or the more significant the rate of change, the more regular this re-calculation.

The normalised distance is stored in a memory, and is looked up for future measurements of time of flights and used to convert those time of flight measurements into an accurate rotational speed measurement. The normalised distance can be considered to be a distance factor which forms the basis of a speed calculation which takes account of movement of the sensors. The distance factor is a form of correction factor which corrects for the variations in magnetic distance between the sensors.

When the normalised distance is known, the measured time of flight period for the latest blade to pass between the sensors is measured and these values are used to calculate the rotational speed of the bladed shaft, in revolutions per minute (rpm):

$$Engine \ Speed = \frac{60 \ x \ ND}{ToF_N \ x \ K} \ (rpm) \ . \qquad \ldots\ldots\ldots\ldots(4)$$

where : $ToF_N$ is the latest measured Time of Flight Period, and

ND is the normalised distance calculated from equation 2 or 3 and K is the number of blades per revolution.

As illustrated in Figure. 3, as each successive blade passes sensor 6, the value of the latest blade period is updated, as each successive blade passes between sensor 5 and sensor 6, the latest time of flight period is measured. This allows the sums of the blade periods and time of flight periods to be updated if necessary. Hence, the normalised distance value can also be updated and the finally, the shaft rotational speed calculated and updated.

A result of the system described above is that the shaft rotational speed can be calculated from a single blade time of flight period measurement and is therefore updated as each successive blade period and time of flight period is recorded. Shaft rotational speed can therefore be measured with a faster response time and a higher degree of accuracy than that which is achievable by known methods of speed measurement.

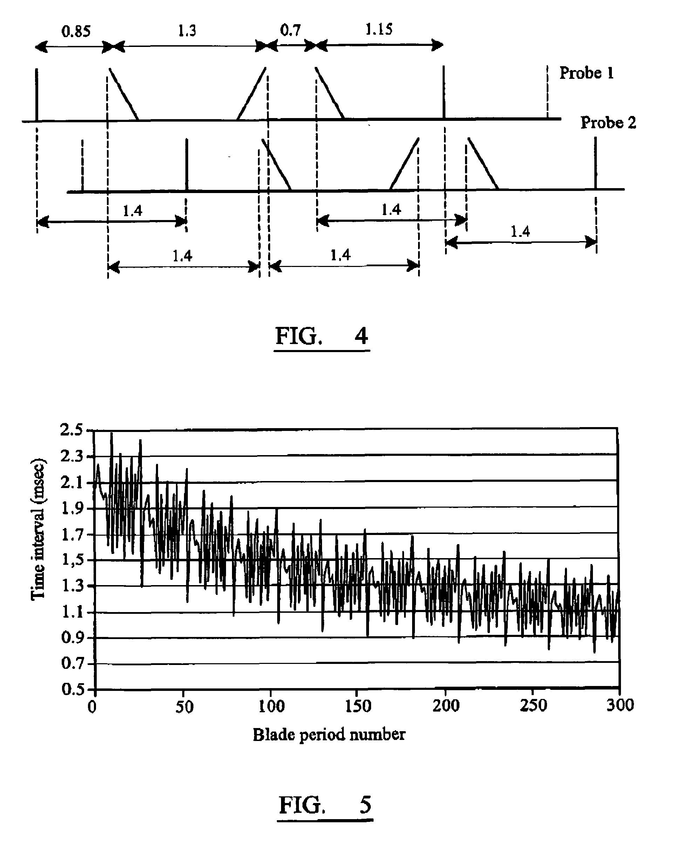

As shown in figures 1a and 4, blade jitter is caused by blades (or blade tips) not being in their nominal equally spaced positions 12. This offset from the nominal position results from the fact that blades are mounted on a pin and the forces acting thereon can cause the blades to pivot around the pin. This jitter causes the blade period times measured from blade to blade to differ from one blade to the next, causing it to appear as if the rotational speed is constantly changing. The speed change is not smooth and continuous, but appears as a repetitive and varying error as shown in figure 5. Taking measurements over one revolution reduces the effect of blade jitter - for every increase in blade separation caused by jitter of a particular blade, there is a corresponding decrease because as one blade, for example, moves closer to the preceding blade, it must move further away by the same distance from its following blade.

A further limitation of using the time of flight principle described above is that it can be only used where the blade jitter movement velocity during the time period, T, required for the blade to cover the distance, S, is several orders of magnitude smaller than the blade rotational velocity.

The calibration technique described above involves a comparison of the time of flight period measurements for each successive blade that passes between the sensors 5, 6, with the shaft speed measurements obtained from the cumulative total of the blade to blade period measurements recorded during a previous complete revolution of the shaft. The shaft speed over one complete revolution is calculated from the time period measurements for all of the blades fitted to the compressor disc to pass one of the sensors. The number of blades must therefore be counted to secure correct measurements.

In order to accurately calibrate the distance S, we have to know the number of blades. In operation, the speed sensors may not detect the presence of one or more blades and as a result, they will not generate a pulse signal. This may be caused by one or more blades being damaged (e.g. having a bent or broken tip), or the pulse amplitude generated by the sensors might be too small to be detected by the processing circuitry connected to the sensors. This condition shall be referred to as the presence of 'missing pulses'.

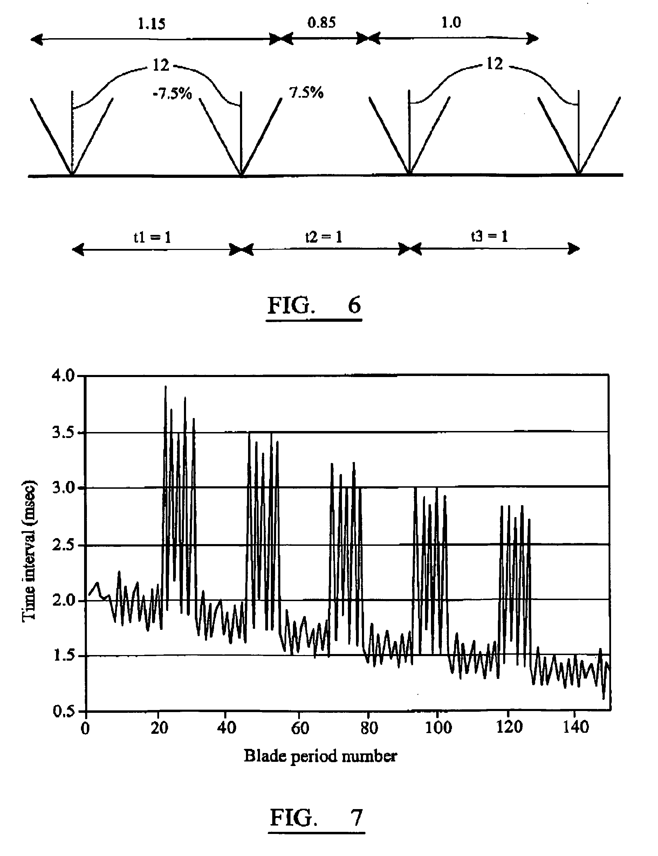

If one or more missing pulses are present, the apparent time between successive blades passing one of the sensors (e.g. sensor 6) - the blade period - appears much longer than the condition where there are no missing pulses (see figure 6). This results in a low shaft rotational speed calculation compared to when there are no missing pulses. It is therefore important to compensate for missing pulses when calculating shaft rotational speed.

To simplify the following description of the preferred embodiment, normalised times will be used, where '1' shall represent the nominal time period between perfectly positioned blades passing the sensors.

For example and with reference to figures 4 and 6, if there is assumed to be $\pm$ 7.5% blade jitter on each blade (i.e. blade jitter expressed as a percentage of nominal or theoretical blade separation), this will cause the blade period to vary between a minimum blade period of:

$$BP_{min} = 1 - 2 \times 0.075 = 1 - 0.15 = 0.85 \qquad (5)$$

and a normalised maximum blade period of:

$$BP_{max} = 1 + 2 \times 0.075 = 1 + 0.15 = 1.15 \qquad (6)$$

However, when one missing pulse is present, as shown in Figure. 6, the normalised minimum blade period is calculated by:

$$BP_{min} = 1 + 1 - (2 \times 0.075) = 1.85 \qquad (7)$$

and a maximum blade period is calculated by:

$$BP_{max} = 1 + 1 + 2 \times 0.075 = 2.15 \qquad (8)$$

Therefore, the presence of a single missing pulse gives a nominal normalised blade period of 2, two missing pulses give a nominal Blade Period BP of 3, and so on.

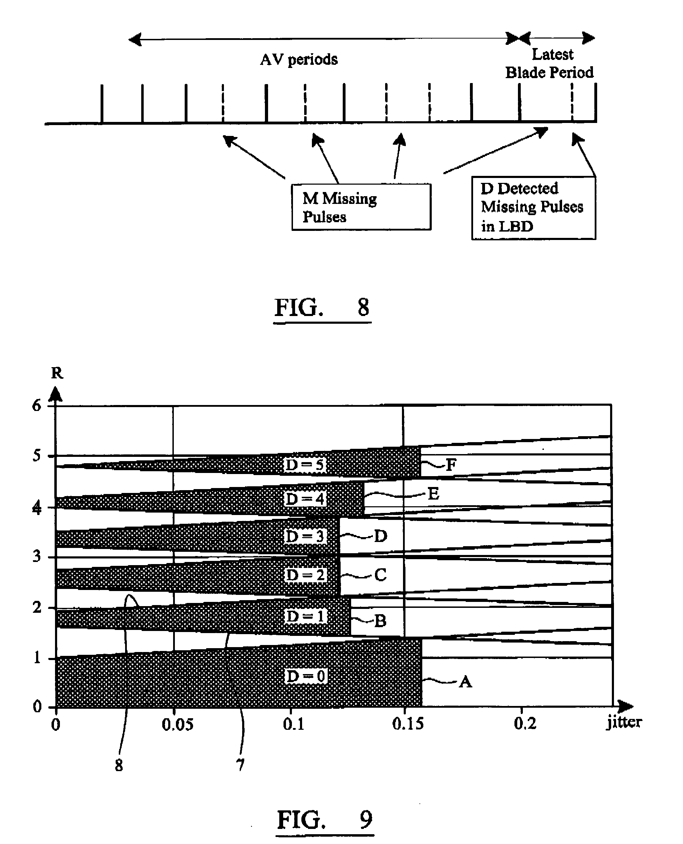

Various methods for detecting the number of missing pulses present in a number of measured blade periods are envisaged and shall now be considered in turn. In the following discussions of the methods, 'AV' is used for the number of blade periods over which an average blade period is taken, and 'M' is the total number of missing pulses present in that sample taken over AV blade periods (see Figure 8).

One method of detecting missing pulses is based on finding the ratio, R, of the latest blade period (LBP) to the average blade period over the last AV periods of measurements ($BP_{AV}$) (see Figure. 8). In this method, the AV number of periods does not include the latest blade period.

As each successive blade tip passes one of the sensors (say sensor 5 in Figures 2, 3), a pulse is generated and the attached circuitry measures the latest blade period LBP (the elapsed time between successive blades passing the same sensor) and these values are stored in the memory.

When a predetermined number AV of blades have been detected by the sensor, an average blade period over the AV periods is calculated.

If there are 'M' missing pulses in a compressor disc having 'K' blades and in the latest blade period, there are 'D' missing pulses (see Figure 8), the latest blade period (LBP) is given by:

$$LBP = D + 1 \pm 2 \times j \ldots\ldots\ldots\ldots\ldots\ldots\ldots\ldots\ldots\ldots\ldots\ldots\ldots\ldots\ldots(9)$$

where: j is the maximum value of blade jitter

The total of the blade periods to be averaged is:

$$T = AV + M \pm 2 \times j \ldots\ldots\ldots\ldots\ldots\ldots\ldots\ldots\ldots\ldots\ldots\ldots\ldots\ldots(10)$$

The average blade period over the last AV periods is then:

$$BP_{AV} = T / AV \ldots\ldots\ldots\ldots\ldots\ldots\ldots\ldots\ldots\ldots\ldots\ldots\ldots\ldots\ldots(11)$$

The values of LBP and $BP_{AV}$ are then used to calculate the Ratio, R, of the latest blade period (LBP) to the average blade period over the last AV periods of measurements ($BP_{AV}$) is then:

$$\text{Ratio} = LBP / BP_{AV} = (LBP / T) \times AV \qquad\qquad (12)$$

This ratio is at a maximum when LBP has its largest value and T has its smallest value :

$$\text{Ratio}_{MAX} = AV \times \frac{D + 1 + 2 \times j}{AV + M - 2 \times j} \ldots\ldots\ldots\ldots\ldots\ldots\ldots\ldots\ldots\ldots\ldots\ldots \qquad (13)$$

This ratio is at a minimum when LBP has its smallest value and T has its largest value:.

$$\text{Ratio}_{MIN} = AV \times \frac{D + 1 - 2 \times j}{AV + M + 2 \times j} \ldots\ldots\ldots\ldots\ldots\ldots\ldots\ldots\ldots\ldots\ldots\ldots(14)$$

By way of an example of the detection of the total number of missing pulses in AV blade periods, Equations 13 and 14 set out above have been used to calculate the Ratio$_{max}$ and Ratio$_{min}$ for various values of blade jitter and various values of D (number of missing pulses in last blade period) and M (number of missing pulses in a single revolution of compressor disc). Figure. 9 is a graph showing the relationship between the Ratio, R, and the jitter value, calculated for: AV = 20, D = 0 to 5 and M = 0 to 5.

For each value of D, the 'relevant lines' on the graph are the outermost lines (e.g. lines 7, 8 for D=1, where 7 is the line corresponding to D=1, M=5, minimum, and 8 is the line corresponding to D=1, M=1, maximum) plotted for that value of D, (see Figure 9).

As each successive blade passes sensor 6, the value of R (see equation 12) for the latest blade period is calculated by the system's data processors. Figure 9 illustrates the calculations carried out by software implementing the invention to create a look-up table listing the number of missing pulses which correspond to calculated vales of the ratio R and values of blade jitter. If the calculated value of R (when plotted on the graph of figure 9) lies in the region before the relevant lines for one D value cross those for another D value - i.e. where the value of R lies within one of hatched regions A, B, C, D, E or F of Figure. 9, the value of D can be ascertained from a look-up table or database corresponding to the graph of figure 9 as there is only one possible region or outcome.

For example (see figure 9), if when AV=20 and M is between 0 and 5, the value of jitter is 0.12, and the calculated value of the ratio, R, is 1.9, R falls within hatched region B of Figure 9, the graph shows that the value for D (missing pulses in latest blade period) is therefore 1. However, if when AV=20 and M is between 0 and 5 and the value of jitter is say 0.2, the value of the ratio R will fall to the right of hatched region B, beyond the maximum allowable jitter limit. As a result, D cannot be ascertained from the graph of Figure 9 or an equivalent look-up table. Experiments suggest that jitter values are not that great so software algorithms with look-up tables matching the hatched values of figure 9 (and table 1 below) can be used as such situations are unlikely to arise.

For a turbine compressor disc having, say, twenty-nine blades, AV must be less than 29-M, but the larger it is the better resolution it has, so 20 is a compromise. The M and D values are selected as 0 to 5 because, in practice, when 5 out of 29 blades are damaged, turbine vibrations are so large that the turbine must be shut down. M and/or D could however be equal to 6, 7, 8 or 9.

To simplify the process described above of determining the value of D, the value of D that corresponds to a range of values of R for the latest blade period can be put in a table format as shown below in Table 1.

Table 1 - Calculation of D for given ranges of R

| Range of values of ratio | Max. jitter value | No. of missing pulses, D |
|---|---|---|
| 0 < R < 1.348 | 0.156 | 0 |
| 1.34 < R < 2.18 | 0.128 | 1 |
| 2.18 < R < 2.98 | 0.12 | 2 |
| 2.98 < R < 3.75 | 0.12 | 3 |
| 3.75 < R < 4.49 | 0.131 | 4 |
| 4.49 < R | 0.159 | 5 |

As described above, it is only possible to determine D for a value of R where the jitter value does not exceed the given maximum jitter value given in Table 1, which corresponds to the jitter limit of the hatched regions A to F (Figure. 9). If the value of blade jitter exceeds this maximum permissible jitter value, the calculations cannot be performed.

The maximum value of jitter for a given turbine is established during a separate test. In practice, the blade jitter experienced by the turbine blades during shaft rotation is much smaller than the limits given in Table 1.. Software implementing the invention can therefore work with a look-up table matching table 1.

To establish the number of missing pulses, M, in a full revolution of the bladed shaft, the calculations have to be performed K -$\Sigma$D times, where: K is the number of blades attached to the compressor disc, and $\Sigma$D is the sum of detected missing pulses in the Latest Blade Period. D is measured during every measurement, so the sum of Ds should give M, but the calculations are performed K -$\Sigma$D times to try and avoid counting the same Ds twice.

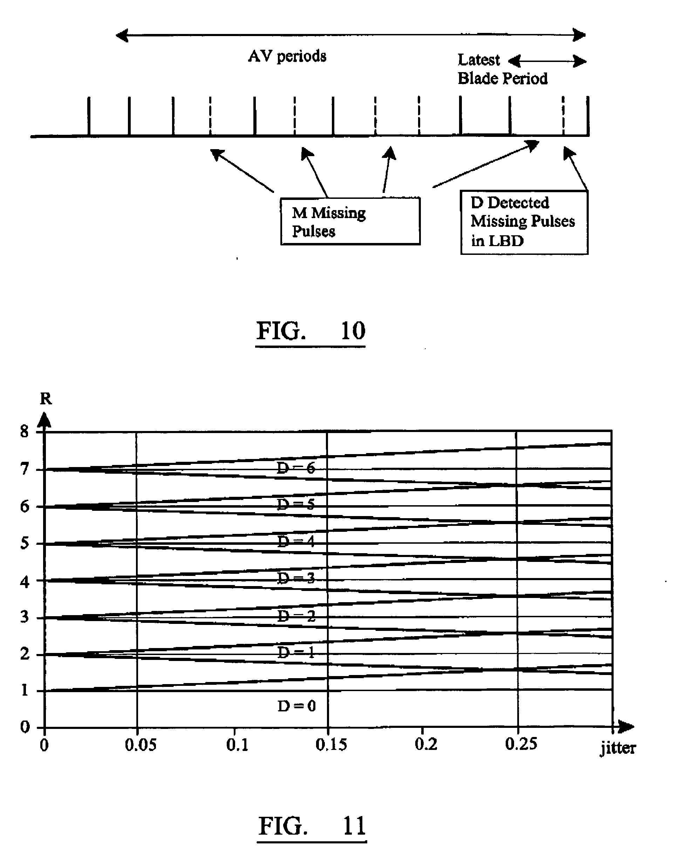

In a second method of detecting the presence of missing pulses, the number of blade periods to be averaged, AV, includes the Latest Blade Period as shown in Figure. 10. Therefore, the total AV time period may include more missing pulses than in the previously described method as, in the subject method, AV includes both any missing pulses M and any missing pulses D.

In this method, the cumulative total of the blade periods to be averaged is:

$$T = AV + (M-D) \pm 2 \times j \dots\dots\dots\dots\dots\dots\dots\dots\dots\dots\dots\dots\dots\dots\dots\dots\dots(15)$$

The average blade period is calculated by:

$$BP_{AV} = T / AV \dots\dots\dots\dots\dots\dots\dots\dots\dots\dots\dots\dots\dots\dots\dots\dots\dots\dots\dots(16)$$

The ratio of the latest blade period to the average blade period over the last AV periods of measurements is then calculated by:

$$Ratio = LBP / BP_{AV} = LBP/T \times AV$$

Again, this ratio is at a maximum when LBP has its largest value and T has its smallest value (Equation 10) and the ratio is at a minimum when LBP has its smallest value and T has its largest value (Equation 11).

$$Ratio_{MAX} = AV \times \frac{D+1+2 \times j}{AV+M-D-2 \times j} \dots\dots\dots\dots\dots\dots\dots\dots\dots\dots\dots\dots\dots\dots\dots(17)$$

$$Ratio_{MIN} = AV \times \frac{D+1-2 \times j}{AV+M-D+2 \times j} \dots\dots\dots\dots\dots\dots\dots\dots\dots\dots\dots\dots\dots\dots(18)$$

The same process as that described for the above method is then used to ascertain the values of D and M for use in calculating the shaft rotational speed.

When the blade jitter values are larger than the maximum permissible values listed in Table 1, or it is possible that more than 5 missing pulses may be present in K periods, it may be more reliable to use a method based on the measurements of blade to blade times using the predictor-limiter method of GB 2,414, 300. The predictor-limiter arrangement of GB 2,414,300 works by predicting blade time periods from historical sensed blade time periods. Only sensed blade time periods which fall within a defined range of acceptable values are used to calculate predicted time periods with blade time periods outside the range of acceptable values being ignored as likely to correspond to a missing pulse or blade. The predicted blade time periods are used to calculate the speed of the shaft.

The predictor limiter-method removes missing pulse blade periods and therefore blade to blade time measurements give us a Reference Period.

Using this method, the number of missing pulses present in one period is obtained by calculation of the ratio:

$$R = \frac{\text{Latest Blade Period}}{\text{Reference Period}} \quad \dots\dots\dots\dots\dots\dots\dots\dots\dots(19)$$

The latest blade period is the elapsed time between pulses produced by successive blades passing a single sensor and is calculated by:

$$LBP = D + 1 \pm 2 \times j \quad\quad\quad (20)$$

where:

D is the number of missing pulses, and
j is the jitter value.

The Reference Period is obtained using predictor-limiter calculations as described in GB 2,414,300. In normalised notation, the reference period is equal to 1, hence the ratio of Equation 19 is simply equal to the latest blade period.

The calculations must be performed K -$\Sigma$D times to establish M as for method 1 described above.

The results of calculations of the ratios of equation 19 are shown in Figure. 11 and Table 2.

Table 2 - Calculation of D for ranges of the ratio, R

| Range of Values of Ratio | Max. Jitter range | No. of missing pulses D |
|---|---|---|
| 0 < R < 1.5 | 0.25 | 0 |
| 1.5 < R < 2.5 | 0.25 | 1 |
| 2.5 < R < 3.5 | 0.25 | 2 |
| 3.5 < R < 4.5 | 0.25 | 3 |
| 4.5 < R < 5.5 | 0.25 | 4 |
| 5.5 < R < 6.5 | 0.25 | 5 |
| 6.5 < R | 0.25 | 6 |

As with the previous methods of determining the number of missing pulses, the value of D is only admissible where the maximum blade jitter value is not exceeded. In practice, blade jitter of 0.25 is never observed, hence the value of D should always be ascertainable from Table 2. Software implementing the invention can therefore work with an equivalent look-up table.

Whichever method of determining the number of missing pulses present is employed, the result is the total number of missing pulses, M, that result from a complete revolution of the bladed shaft. As shown in the flow diagram of Figure. 3, when the value of M has been determined, the cumulative total blade period over a total revolution of the bladed shaft can be calculated, i.e. the sum of the individual blade periods for K-M blades, where K is the total number of blades on the shaft and can be counted.

**Claims**

1.  A system for monitoring the rotational speed of a gas turbine shaft having a number of electrically conductive spaced blades on and/or rotating with shaft, the system including:

    i) a magnet for generating a magnetic flux pattern in the path of said blades;
    ii) two spaced eddy current sensors for sensing the movement of said blades past the respective sensors, each said sensor including an eddy current detector element to be positioned adjacent said path to detect magnetic fields generated by eddy currents generated in each said spaced blade as it moves through the flux pattern, and induce a voltage in each sensor output, the voltage varying with variations in the eddy current sensed by the respective sensors so as to create a voltage signal pulse corresponding to the passage of a blade past each sensor;
    iii) a timer for determining the time period between voltage signal pulses generated by the same blade as it passes between the two sensors;
    iv) distance determination means determining an effective distance which is a measure of the effective distance between the locations at which said blades generate a respective signal pulse at each of said sensors;
    v) means for updating the distance determination as the effective distance changes over time; and
    vi) speed calculation means for calculating speed from the time period of element (iii) and the effective distance of elements (v).

2.  A system according to claim 1 including:

    (a) first and second eddy current sensors for sensing movement of said blades;
    (b) means for measuring the time of flight between a first signal generated as a first blade passes the first sensor and a second signal generated as the first blade passes the second sensor;
    (c) means for determining the total time for a selected number of blades to pass the first and second sensors;
    (d) means for measuring the time between a third signal generated by a blade as it passes one of the sensors and a fourth signal generated as the next blade passes the same one of the sensors;
    (e) means for determining the total time for the selected number of blades to pass the respective sensor of step (d);
    (f) means for determining a correction factor consisting of the ratio of the total time of step (c) to the total time of step (e); and
    (g) memory to store the correction factor; and
    (h) means to apply the correction factor to measured times of flight.

3.  A system according to claim 2 wherein the correction factor is periodically updated.

4.  A system according to claim 2 or claim 3 wherein the correction factor ND is given by the equation:

$$ND = \frac{\sum_{i=N-K}^{i=N} ToF_i}{\sum_{i=N-K}^{i=N} BP_i}$$

where

N is the feature or feature pulse identifier;
i is the summation index;
ToF is the measured time of flight for each respective feature;
BP is the time between the third and fourth signals for each respective pair of features; and
K is the selected number of features

5. A system according to any preceding claim, wherein the blade tips are evenly spaced around the shaft.

6. A system according to any preceding claim, wherein the blade tips are irregularly spaced around the shaft and the selected number of blades corresponds to a complete revolution of the shaft.

7. A system according to claim 6 wherein the blades are either compressor blades mounted on the gas turbine shaft.

8. A system according to any preceding claim wherein the magnet is a permanent magnet.

9. A system according to any of claims 1 to 8 wherein the magnet is a coil of electrically conductive material connected to an a.c. voltage supply.

10. A method for monitoring the rotation speed of a gas turbine shaft having a number of electrically conductive spaced blades on and/or rotating with shaft, the method including:

   i) a magnet for generating a magnetic flux pattern in the path of said spaced blades;
   ii) providing two spaced eddy current sensors;
   iii) sensing the movement of said spaced blades past the respective sensors, by detecting the magnetic fields caused by eddy currents generated in each said spaced feature as it moves through the flux pattern, and thereby inducing a voltage in each sensor output, the voltage varying with variations in the current sensed by the respective sensors so as to induce a voltage signal corresponding to the passage of a blade past each sensor;
   iv) determining the time period between the signals induced by the same blade as it passes between the two sensors;
   v) determining an effective distance which is a measure of the distance between the points at which said blades induce a respective signal at each of said sensors;
   vi) updating the distance determination as the effective distance changes over time; and
   vii) calculating speed from the time period of element (iv) and the effective distance of element (v).

11. A method according to claim 10 including the steps of:

   a) providing first and second eddy current sensors for sensing movement of said blades ;
   b) measuring the time of flight between a first signal induced as a first blade passes the first sensor and a second signal generated as the first blade passes the second sensor;
   c) determining the total time for a selected number of blades to pass the first and second sensors;
   d) measuring the time between a third signal generated by a blade as it passes one of the sensors and a fourth signal generated as the next blade passes the same one of the sensors;
   e) determining the total time for the selected number of blades to pass the respective sensor of step (d);
   f) determining a correction factor consisting of the ratio of the total time of step (c) to the total time of step (e);
   g) storing the correction factor; and
   h) applying the correction factor to measured times of flight.

12. A method according to claim 11 wherein the correction factor is periodically updated.

13. A method according to claim 11 or claim 12 wherein the correction factor ND is given by the equation:

$$\text{ND} \quad = \quad \frac{\displaystyle\sum_{i = N - K}^{i = N} \text{ToF}_i}{\displaystyle\sum_{i = N - K}^{i = N} \text{BP}_i}$$

where

   N is the feature or feature pulse identifier;
   i is the summation index;

ToF is the measured time of flight for each respective feature;
BP is the time between the third and fourth signals for each respective pair of features; and
K is the selected number of features.

**14.** A method according to any of claims 10 to 13, wherein the blades are compressor blades mounted on the gas turbine shaft.

**15.** A method according to claim 14 wherein the selected number of blades corresponds to a complete revolution of the shaft.

**Patentansprüche**

**1.** System zur Überwachung der Drehzahl einer Gasturbinenwelle mit einer Anzahl elektrisch leitfähiger, voneinander beabstandeter, an der Welle befindlicher und/oder sich mit der Welle drehender Schaufeln, wobei das System Folgendes beinhaltet:

i) einen Magneten zum Erzeugen eines im Weg der genannten Schaufeln verlaufenden magnetischen Flusses,
ii) zwei voneinander beabstandete Wirbelstromsensoren zum Erfassen der Bewegung der genannten Schaufeln vorbei an den jeweiligen Sensoren, wobei die genannten Sensor jeweils ein neben dem genannten Weg zu positionierendes Wirbelstromdetektorelement aufweisen, um magnetische Felder zu erkennen, die von Wirbelströmen erzeugt werden, die in jeder genannten beabstandeten Schaufel erzeugt werden, während sie sich durch den Flussverlauf bewegt, und in jedem Sensorausgang eine Spannung zu induzieren, wobei die Spannung im Verhältnis zu Schwankungen des von den jeweiligen Sensoren erfassten Wirbelstroms variiert, um einen Spannungssignalimpuls zu erzeugen, der dem Vorbeilaufen einer Schaufel an jedem Sensor entspricht,
iii) einen Zeitgeber zum Ermitteln des Zeitabschnitts zwischen Spannungssignalimpulsen, die von derselben Schaufel erzeugt werden, während sie zwischen den beiden Sensoren hindurchläuft,
iv) Entfernungsermittlungsmittel, das eine effektive Entfernung ermittelt, die ein Maß der effektiven Entfernung zwischen den Stellen ist, an welchen die genannten Schaufeln einen jeweiligen Signalimpuls an jedem der genannten Sensoren erzeugen,
v) Mittel zum Aktualisieren der Entfernungsermittlung bei der Veränderung der effektiven Entfernung mit der Zeit und
vi) Geschwindigkeitsberechnungsmittel zum Berechnen der Geschwindigkeit anhand des Zeitabschnitts von Element (iii) und der effektiven Entfernung von Element (v).

**2.** System nach Anspruch 1, das Folgendes beinhaltet:

(a) einen ersten und einen zweiten Wirbelstromsensor zum Erfassen der Bewegung der genannten Schaufeln,
(b) Mittel zum Messen der Laufzeit zwischen einem ersten Signal, das beim Vorbeilaufen einer ersten Schaufel an dem ersten Sensor erzeugt wird, und einem zweiten Signal, das beim Vorbeilaufen der ersten Schaufel an dem zweiten Sensor erzeugt wird,
(c) Mittel zum Ermitteln der Gesamtzeit für das Vorbeilaufen einer ausgewählten Anzahl von Schaufeln an dem ersten und dem zweiten Sensor,
(d) Mittel zum Messen der Zeit zwischen einem dritten Signal, das von einer Schaufel beim Vorbeilaufen an einem der Sensoren erzeugt wird, und einem vierten Signal, das beim Vorbeilaufen der nächsten Schaufel an demselben der Sensoren erzeugt wird,
(e) Mittel zum Ermitteln der Gesamtzeit für das Vorbeilaufen der ausgewählten Anzahl von Schaufeln an dem jeweiligen Sensor von Schritt (d),
(f) Mittel zum Ermitteln eines Korrekturfaktors, der aus dem Verhältnis der Gesamtzeit von Schritt (c) zu der Gesamtzeit von Schritt (e) besteht, und
(g) Speicherplatz zum Speichern des Korrekturfaktors, und
(h) Mittel zum Anwenden des Korrekturfaktors auf gemessene Laufzeiten.

**3.** System nach Anspruch 2, wobei der Korrekturfaktor periodisch aktualisiert wird.

**4.** System nach Anspruch 2 oder 3, wobei der Korrekturfaktor ND sich aus der folgenden Gleichung ergibt:

$$ND = \frac{\displaystyle\sum_{i=N-K}^{i=N} ToF_i}{\displaystyle\sum_{i=N-K}^{i=N} BP_i}$$

wobei

N die Merkmal- oder Merkmalpulskennung ist,
i der Summationsindex ist,
ToF die gemessene Laufzeit für jedes jeweilige Merkmal ist,
BP die Zeit zwischen dem dritten und dem vierten Signal für jedes jeweilige Merkmalspaar ist und
K die ausgewählte Anzahl von Merkmalen ist.

5.  System nach einem der vorhergehenden Ansprüche, wobei die Schaufelspitzen um die Welle herum gleichmäßig voneinander beabstandet sind.

6.  System nach einem der vorhergehenden Ansprüche, wobei die Schaufelspitzen um die Welle herum ungleichmäßig voneinander beabstandet sind und die ausgewählte Anzahl von Schaufeln einer vollständigen Umdrehung der Welle entspricht.

7.  System nach Anspruch 6, wobei die Schaufeln Verdichterschaufeln sind, die an der Gasturbinenwelle montiert sind.

8.  System nach einem der vorhergehenden Ansprüche, wobei der Magnet ein Permanentmagnet ist.

9.  System nach einem der Ansprüche 1 bis 8, wobei der Magnet eine Spule aus elektrisch leitfähigem Material ist, die mit einer Wechselspannungsversorgung verbunden ist.

10. Verfahren zum Überwachen der Drehzahl einer Gasturbinenwelle mit einer Anzahl elektrisch leitfähiger, voneinander beabstandeter, an der Welle befindlicher und/oder sich mit der Welle drehender Schaufeln, wobei das Verfahren Folgendes beinhaltet:

    i) einen Magneten zum Erzeugen eines im Weg der genannten voneinander beabstandeten Schaufeln verlaufenden magnetischen Flusses,
    ii) Bereitstellen von zwei voneinander beabstandeten Wirbelstromsensoren,
    iii) Erfassen der Bewegung der genannten Schaufeln vorbei an den jeweiligen Sensoren durch Erkennen der magnetischen Felder, die von Wirbelströmen erzeugt werden, die in jedem der genannten voneinander beabstandeten Merkmale erzeugt werden, während es sich durch den Flussverlauf bewegt, und dadurch Induzieren einer Spannung in jedem Sensorausgang, wobei die Spannung im Verhältnis zu Schwankungen in dem von den jeweiligen Sensoren erfassten Strom variiert, um ein Spannungssignal zu induzieren, das dem Vorbeilaufen einer Schaufel an jedem Sensor entspricht,
    iv) Ermitteln des Zeitabschnitts zwischen den Signalen, die von derselben Schaufel induziert werden, während sie zwischen den beiden Sensoren hindurchläuft,
    v) Ermitteln einer effektiven Entfernung, die ein Maß der Entfernung zwischen den Punkten ist, an welchen die genannten Schaufeln ein jeweiliges Signal an jedem der genannten Sensoren erzeugen,
    vi) Aktualisieren der Entfernungsermittlung bei der Veränderung der effektiven Entfernung mit der Zeit und
    vii) Berechnen der Geschwindigkeit anhand des Zeitabschnitts von Element (iii) und der effektiven Entfernung von Element (v).

11. Verfahren nach Anspruch 10, das die folgenden Schritte beinhaltet:

    a) Bereitstellen eines ersten und eines zweiten Wirbelstromsensors zum Erfassen der Bewegung der genannten Schaufeln,

b) Messen der Laufzeit zwischen einem ersten Signal, das beim Vorbeilaufen einer ersten Schaufel an dem ersten Sensor induziert wird, und einem zweiten Signal, das beim Vorbeilaufen der ersten Schaufel an dem zweiten Sensor erzeugt wird,

c) Ermitteln der Gesamtzeit für das Vorbeilaufen einer ausgewählten Anzahl von Schaufeln an dem ersten und dem zweiten Sensor,

d) Messen der Zeit zwischen einem dritten Signal, das von einer Schaufel beim Vorbeilaufen an einem der Sensoren erzeugt wird, und einem vierten Signal, das beim Vorbeilaufen der nächsten Schaufel an demselben der Sensoren erzeugt wird,

e) Ermitteln der Gesamtzeit für das Vorbeilaufen der ausgewählten Anzahl von Schaufeln an dem jeweiligen Sensor von Schritt (d),

f) Ermitteln eines Korrekturfaktors, der aus dem Verhältnis der Gesamtzeit von Schritt (c) zu der Gesamtzeit von Schritt (e) besteht, und

g) Speichern des Korrekturfaktors, und

h) Anwenden des Korrekturfaktors auf gemessene Laufzeiten.

**12.** Verfahren nach Anspruch 11, wobei der Korrekturfaktor periodisch aktualisiert wird.

**13.** Verfahren nach Anspruch 11 oder Anspruch 12, wobei der Korrekturfaktor ND sich aus der folgenden Gleichung ergibt:

$$ND = \frac{\sum\limits_{i=N-K}^{i=N} ToF_i}{\sum\limits_{i=N-K}^{i=N} BP_i}$$

wobei

N die Merkmal- oder Merkmalpulskennung ist,

i der Summationsindex ist,

ToF die gemessene Laufzeit für jedes jeweilige Merkmal ist,

BP die Zeit zwischen dem dritten und dem vierten Signal für jedes jeweilige Merkmalspaar ist und

K die ausgewählte Anzahl von Merkmalen ist.

**14.** Verfahren nach einem der Ansprüche 10 bis 13, wobei die Schaufeln Verdichterschaufeln sind, die an der Gasturbinenwelle montiert sind.

**15.** Verfahren nach Anspruch 14, wobei die ausgewählte Anzahl von Schaufeln einer vollständigen Umdrehung der Welle entspricht.

**Revendications**

**1.** Système de surveillance de la vitesse de rotation d'un arbre de turbine à gaz comprenant un certain nombre de pales espacées électriquement conductrices sur et/ou tournant avec l'arbre, le système comportant :

i) un aimant pour générer un profil de flux magnétique dans la trajectoire desdites pales ;

ii) deux capteurs de courant de Foucault espacés pour détecter le mouvement desdites pales devant les capteurs respectifs, chaque dit capteur comportant un élément de détecteur de courant de Foucault destiné à être positionné à proximité de ladite trajectoire pour détecter les champs magnétiques générés par les courants de Foucault générés dans chaque dite pale espacée quand elle passe à travers le profil de flux, et induire une tension dans chaque sortie de capteur, la tension variant avec des variations du courant de Foucault détecté par les capteurs respectifs de manière à créer une impulsion de signal de tension correspondant au passage d'une pale devant chaque capteur ;

iii) une temporisation pour déterminer la période de temps entre des impulsions de signal de tension générées par la même pale quand elle passe entre les deux capteurs ;

iv) un moyen de détermination de distance déterminant une distance effective qui est une mesure de la distance effective entre les emplacements auxquels lesdites pales génèrent une impulsion de signal respective au niveau de chacun desdits capteurs ;

v) un moyen d'actualisation de la détermination de distance quand la distance effective change dans le temps ; et

vi) un moyen de calcul de vitesse pour calculer la vitesse à partir de la période de temps de l'élément (iii) et de la distance effective des éléments (v).

2. Système selon la revendication 1 comportant :

(a) des premier et second capteurs de courant de Foucault pour détecter un mouvement desdites pales ;

(b) un moyen pour mesurer la durée de vol entre un premier signal généré quand une première pale passe devant le premier capteur et un second signal généré quand la première pale passe devant le second capteur ;

(c) un moyen pour déterminer le temps total que prend un nombre sélectionné de pales pour passer devant les premier et second capteurs ;

(d) un moyen pour mesurer le temps entre un troisième signal généré par une pale quand elle passe devant l'un des capteurs et un quatrième signal généré quand la pale suivante passe devant le même capteur ;

(e) un moyen de détermination du temps total que prend le nombre sélectionné de pales pour passer devant le capteur respectif de l'étape (d) ;

(f) un moyen pour déterminer un facteur de correction consistant en le rapport du temps total de l'étape (c) sur le temps total de l'étape (e) ; et

(g) un moyen pour mémoriser le facteur de correction ; et

(h) un moyen pour appliquer le facteur de correction aux temps de vol mesurés.

3. Système selon la revendication 2, dans lequel le facteur de correction est actualisé périodiquement.

4. Système selon la revendication 2 ou la revendication 3, dans lequel le facteur de correction ND est donné par l'équation :

$$ND = \frac{\sum_{i=N-K}^{i=N} ToF_i}{\sum_{i=N-K}^{i=N} BP_i}$$

où

N est l'identifiant d'élément ou d'impulsion d'élément ;

i est l'indice de sommation ;

ToF est le temps de vol mesuré de chaque élément respectif ;

BP est le temps entre les troisième et quatrième signaux pour chaque paire d'éléments ; et

K est le nombre sélectionné d'éléments.

5. Système selon l'une quelconque des revendications précédentes, dans lequel les pointes des pales sont équidistantes autour de l'arbre.

6. Système selon l'une quelconque des revendications précédentes, dans lequel les pointes des pales ne sont pas équidistantes autour de l'arbre et le nombre sélectionné de pales correspond à une révolution complète de l'arbre.

7. Système selon la revendication 6, dans lequel les pales sont soit des pales de compresseur montées sur l'arbre de turbine à gaz.

8. Système selon l'une quelconque des revendications précédentes, dans lequel l'aimant est un aimant permanent.

9. Système selon l'une quelconque des revendications 1 à 8, dans lequel l'aimant est une bobine de matériau électriquement conducteur connectée à une alimentation de tension C.A.

10. Procédé de surveillance de la vitesse de rotation d'un arbre de turbine à gaz comprenant un certain nombre de pales espacées électriquement conductrices sur et/ou tournant avec l'arbre, le procédé comportant :

i) un aimant pour générer un profil de flux magnétique dans la trajectoire desdites pales ;
ii) la fourniture de deux capteurs de courant de Foucault espacés :
iii) la détection du mouvement desdites pales espacées devant les capteurs respectifs, en détectant les champs magnétiques causés par les courants de Foucault générés dans chaque dite pale espacée quand elle passe à travers le profil de flux, et induisant ainsi une tension dans chaque sortie de capteur, la tension variant avec des variations du courant détecté par les capteurs respectifs de manière à induire un signal de tension correspondant au passage d'une pale devant chaque capteur ;
iv) la détermination de la période de temps entre les signaux induits par la même pale quand elle passe entre les deux capteurs ;
v) la détermination d'une distance effective qui est une mesure de la distance entre les points auxquels lesdites pales induisent un signal respectif au niveau de chacun desdits capteurs ;
vi) l'actualisation de la détermination de distance quand la distance effective change dans le temps ; et
vi) le calcul de la vitesse à partir de la période de temps de l'élément (iv) et de la distance efficace de l'élément (v).

11. Procédé selon la revendication 10 comportant les étapes consistant à :

(a) fournir des premier et second capteurs de courant de Foucault pour détecter un mouvement desdites pales ;
(b) mesurer la durée de vol entre un premier signal induit quand une première pale passe devant le premier capteur et un second signal généré quand la première pale passe devant le second capteur ;
(c) déterminer le temps total que prend un nombre sélectionné de pales pour passer devant les premier et second capteurs ;
(d) mesurer le temps entre un troisième signal généré par une pale quand elle passe devant l'un des capteurs et un quatrième signal généré quand la pale suivante passe devant le même capteur ;
(e) déterminer le temps total que prend le nombre sélectionné de pales pour passer devant le capteur respectif de l'étape (d) ;
(f) déterminer un facteur de correction consistant en le rapport du temps total de l'étape (c) sur le temps total de l'étape (e) ; et
(g) mémoriser le facteur de correction ; et
(h) appliquer le facteur de correction aux temps de vol mesurés.

12. Procédé selon la revendication 11, dans lequel le facteur de correction est actualisé périodiquement.

13. Procédé selon la revendication 11 ou la revendication 12, dans lequel le facteur de correction ND est donné par l'équation :

$$ ND = \frac{\sum\limits_{i=N-K}^{i=N} ToF_i}{\sum\limits_{i=N-K}^{i=N} BP_i} $$

où

N est l'identifiant d'élément ou d'impulsion d'élément ;
i est l'indice de sommation ;
ToF est le temps de vol mesuré de chaque élément respectif ;
BP est le temps entre les troisième et quatrième signaux pour chaque paire d'éléments ; et
K est le nombre sélectionné d'éléments.

**14.** Procédé selon l'une quelconque des revendications 10 à 13, dans lequel les pales sont des pales de compresseur montées sur l'arbre de turbine à gaz.

**15.** Procédé selon la revendication 14, dans lequel le nombre sélectionné de pales correspond à une révolution complète de l'arbre.

FIG. 1a

FIG. 1b

FIG. 1

FIG. 2a

FIG. 2b

FIG. 2

## FIG. 3

Sensor 5

Sensor 6

Time of Flight $ToFP_N$

Blade Period $BP_N$

Calculate Ratio

Last Blade Periods to Average Blade Period

(Equations 5 & 6)

Calculate Average Blade Periods over AV measurements

Sum of Flight Periods over one Revolution

(K measurements)

Sum of Blade Periods over one Revolution

(K-M) measurements

Calculate Engine Speed

(Equation 13)

Calculate Normalised Distance ND

(Equation 12)

Repeat calculations

$K-\Sigma D$ times to establish value of M

Detection of a number of missing Pulses, D using Table 2

FIG.  4

FIG.  5

FIG. 6

FIG. 7

AV periods

Latest
Blade Period

M Missing
Pulses

D Detected
Missing Pulses
in LBD

## FIG. 8

## FIG. 9

**FIG. 10**

**FIG. 11**

**EP 2 073 022 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2265221 A
- GB 2223103 A
- US 3984713 A
- GB 1386035 A
- EP 1564559 A
- GB 2414300 A